(19) **Europäisches Patentamt**

**European Patent Office**

**Office européen des brevets**

(11) **EP 1 194 484 B1**

(12) **EUROPÄISCHE PATENTSCHRIFT**

(45) Veröffentlichungstag und Bekanntmachung des Hinweises auf die Patenterteilung:
**23.07.2003   Patentblatt 2003/30**

(51) Int Cl.⁷: **C08L 67/02**
  // (C08L67/02, 67:02, 51:04),
C08L25:12

(21) Anmeldenummer: 00943880.5

(22) Anmeldetag: **23.06.2000**

(86) Internationale Anmeldenummer:
**PCT/EP00/05866**

(87) Internationale Veröffentlichungsnummer:
**WO 01/000729 (04.01.2001 Gazette 2001/01)**

(54) **HAFTFÄHIGKEITSVERRINGERTE FORMMASSEN FÜR KRAFTFHRZEUGANWENDUNGEN**

MOLDING COMPOUNDS WITH REDUCED ADHESIVENESS FOR USE IN THE AUTOMOBILE INDUSTRY

MATIERES MOULABLES A ADHESIVITE REDUITE POUR DES APPLICATIONS DANS LE DOMAINE AUTOMOBILE

(84) Benannte Vertragsstaaten:
**AT BE CH CY DE DK ES FI FR GB GR IE IT LI LU MC NL PT SE**

(30) Priorität: **25.06.1999   DE 19929302**

(43) Veröffentlichungstag der Anmeldung:
**10.04.2002   Patentblatt 2002/15**

(73) Patentinhaber: **BASF AKTIENGESELLSCHAFT
67056 Ludwigshafen (DE)**

(72) Erfinder:
  • **FISCHER, Michael
    D-67071 Ludwigshafen (DE)**
  • **RAU, Walter
    D-68165 Mannheim (DE)**

(74) Vertreter: **Isenbruck, Günter, Dr. et al
Isenbruck, Bösl, Hörschler, Wichmann, Huhn,
Patentanwälte
Theodor-Heuss-Anlage 12
68165 Mannheim (DE)**

(56) Entgegenhaltungen:
**EP-A- 0 392 357          DE-A- 19 750 627**

**Beschreibung**

Die Erfindung betrifft Formmassen, Formteile, Gebilde, Recyclate sowie Laminate und deren Verwendung.

Formteile aus polymeren Werkstoffen, die insbesondere im Innenraum von Kraftfahrzeugen zur Anwendung kommen, müssen hohen Anforderungen vor allem bezüglich ihrer mechanischen Eigenschaften, ihrer Oberflächeneigenschaften, ihres Alterungs- sowie ihres Emissions- bzw. Geruchsverhaltens genügen. Für die Herstellung von Formteilen für Kraftfahrzeug-Aufbau- und -Innenanwendungen wurden bisher verschiedene polymere Werkstoffe verwendet.

Ein verwendeter Werkstoff ist ABS. Dieser Werkstoff weist eine schlechte UV-Beständigkeit, eine schlechte Wärmealterungsbeständigkeit und eine schlechte Wärmeformbeständigkeit (Vicat B-Erweichungstemperatur < 110°C) auf.

Ein weiterer verwendeter Werkstoff ist ABS/PC (Polymer-Blend aus Acrylnitril/Butadien/Styrol-Copolymer und Polycarbonat). Dieser Werkstoff weist jedoch eine nur unzureichende UV-Beständigkeit, ein schlechtes Wärmealterungsverhalten (Zähigkeit und Bruchdehnung nach Wärmelagerung), schlechte Spannungsrißbeständigkeit, zum Beispiel gegen Weichmacher, eine schlechte Fließfähigkeit, sowie insbesondere schlechte Emissionseigenschaften und ein schlechtes Geruchsverhalten auf. Unter Geruchsverhalten wird die Neigung von Werkstoffen verstanden, nach einer Temperatur- und Klimalagerung von festgelegter Dauer flüchtige Bestandteile abzugeben, die einen wahrnehmbaren Geruch aufweisen.

Als weiterer Werkstoff kommt ABS/PA (Polymerblend aus ABS und Polyamid) zum Einsatz. Auch ABS/PA weist eine schlechte UV-Beständigkeit, eine schlechte Wärmeformbeständigkeit (Vicat B-Erweichungstemperatur < 110°C), eine schlechte Wärmealterungsbeständigkeit, eine geringe Dimensionsstabilität wegen hoher Feuchtigkeitsaufnahme, sowie eine schlechte Fließfähigkeit auf.

Als weiterer Werkstoff kommt PPE/HIPS (Polymerblend aus Polyphenylenoxid und schlagzäh modifiziertem Polystyrol) zum Einsatz. Nachteilig an diesem Werkstoff sind seine schlechte Fließfähigkeit, schlechte UV-Beständigkeit, Schaumhaftung und Wärmealterungsbeständigkeit, sowie sein schlechtes Geruchsverhalten.

Weiterhin wird PET/PC (Polymerblend aus Polyethylentherphtalat und Polycarbonat) verwendet. Nachteilig an diesem Werkstoff sind seine geringe Spannungsrißbeständigkeit zum Beispiel gegen Weichmacher sowie seine schlechte Fließfähigkeit.

Auch PBT/PC weist als weiterer verwendeter Werkstoff eine schlechte Fließfähigkeit und Spannungsrißbeständigkeit auf.

Die vorstehend genannten Werkstoffe weisen überwiegend eine nur schlechte Wärmeformbeständigkeit auf, die in einer nur geringen Vicat B-Erweichungstemperatur (Vicat B < 130°C) zum Ausdruck kommt, sowie eine schlechte Wärmealterungsbeständigkeit auf. Eine gute Wärmeformbeständigkeit und Wärmealterungsbeständigkeit der eingesetzten Werkstoffe ist jedoch essentiell, da sich der Kraftfahrzeug-Innenraum, insbesondere unter Einwirkung von Sonnenstrahlung, erheblich aufheizen kann.

Auch für Anwendungen im Außenbereich weisen die vorhandenen Materialien Mängel auf. So zeichnen sich Blends aus PPE und PA durch eine schlechte Dimensionsstabilität infolge Wasseraufnahme und durch schlechte Verarbeitbarkeit aus.

Die vorstehend genannten Nachteile konnten mit Polymerwerkstoffen auf der Basis von PBT/ASA/PSAN (Polymerblends aus Polybutylenterephthalat. Acrylnitril/Styrol/Acrylsäureester-Copolymer und Poiystyrol/Acrylrutril-Copolymer) behoben werden. Solche Werkstoffe sind in DE-A 39 11 828 allgemein offenbart. Die Ausführungsbeispiele beziehen sich auf Formmassen mit einem hohen Acrylnitril-Anteil der PSAN-Copolymere. Formteile aus diesen Formmassen weisen jedoch, wie die überwiegende Zahl der vorstehend genannten Werkstoffe, ein schlechtes Emissions- und Geruchsverhalten auf.

Zudem sind diese Polymerwerkstoffe bei der Verarbeitung durch Spritzgußtechnik nachteilhaft. Bei der Spritzgußtechnik zeigen die frisch hergestellten Formkörper, beispielsweise durch nicht vollständige Kristallisation, in den Spritzgußformen eine erhöhte Haftfähigkeit an den Formwänden. Aufgrund dieser erhöhten Haftfähigkeit ist es notwendig, die Oberflächen der Spritzgußformen mit entsprechenden haftvermindernden Mitteln zu versehen, damit die Zykluszeiten der einzelnen Spritzgußvorgänge durch die Haftneigung der Formmasse nicht unnötig verlängert werden. Eine andere Möglichkeit, die Zykluszeit so gering wie möglich zu halten, ist es, der Formmasse selbst haftvermindernde Mittel beizugeben. Sowohl die Verwendung von haftvermindernden Mitteln in der Spritzgußform als auch in der Formmasse selbst führt jedoch meist dazu, daß sich unerwünschte Beläge auf der Oberfläche der Spritzgußform ausbilden, die beispielsweise die Oberfläche des Formteils nachteilhaft beeinflussen. Die Zykluszeit wird als Zeitraum zwischen dem Einspritzen der Formmassenschmelze und dem Entformen des Spritzgußformteils definiert. Die Länge der Zykluszeit wirkt sich unmittelbar auf die Stückzahl pro Spritzgußanlage und damit auf die Kosten des Spritzgußformteils aus. Zwar kann der Haftneigung der Formmasse durch Kühlen der Spritzgußformen entgegengewirkt werden. Damit ist jedoch zum einen ein hoher technischer Aufwand verbunden. Weiterhin führt ein für jeden Zyklus zu wiederholendes Abkühlen über eine große Zykluszahl zu einer durch die damit verbundenen Temperaturschwankungen bedingten schnelleren Materialermüdung der Spritzgußform, die dann häufiger ersetzt werden muß.

Aufgabe der Erfindung ist es, für die Herstellung von Formteilen, die im Innenraum von Kraftfahrzeugen und für Karosserieaußenteile eingesetzt werden, geeignete Formmassen zur Verfügung zu stellen, die ein günstiges Eigenschaftsprofil hinsichtlich ihrer mechanischen, optischen und Oberflächeneigenschaften sowie insbesondere eine gute Wärmeformbeständigkeit, Wärmealterungsbeständigkeit und ein gutes Emissionsverhalten und/oder Geruchsverhalten aufweisen. Weiterhin sollen die Formmassen eine möglichst geringe Dichte aufweisen. Die geringe Dichte ist besonders im Hinblick auf Kraftstoffeinsparung bei Kraftfahrzeugen vorteilhaft. Femer sollen die Formteile gut recycelbar sein. Darüber hinaus besteht eine weitere Aufgabe darin, daß die Haftfähigkeit der Formmassen im Spritzgußverfahren verringert wird, ohne daß andere Eigenschaften durch diese Verringerung nachteilig beeinflußt werden. Zudem besteht eine Aufgabe darin, die Oberfläche der Spritzgußform sowenig wie möglich kühlen zu müssen, um das Formteil aus der Spritzgußform herausnehmen zu können. Ferner besteht eine Aufgabe darin, die Menge an auf der Oberfläche der Spritzgußform bzw. in der Formmasse eingesetzten haftvermindernden Mittel so gering wie möglich zu halten, so daß sich vor allem keine Beläge dieses Haftmittels auf der Oberfläche der Spritzgußform ausbilden.

Gelöst wird die Aufgabe durch eine Formmasse, enthaltend, bezogen auf die Summe der Komponenten A bis G, die insgesamt 100 Gew.-% ergibt,

a) 1 bis 99,59 Gew.-% der Formmasse mindestens eines Polykondensates als Komponente A,

b) 0,1 bis 20 Gew.-% mindestens eines teilchenförmigen Pfropfcopolymerisates mit einer Glasübergangstemperatur der Weichphase unterhalb von 0°C und einer mittleren Teilchengröße von 50 bis 1000 nm als Komponente B,

c) 0,1 bis 20 Gew.-% mindestens eines Copolymerisates als Komponente C aus den Monomeren

c1) 50 bis 90 Gew.-% mindestens eines vinylaromatischen Monomeren als Komponente C1 und

c2) 10 bis 50 Gew.-% Acrylnitril und/oder Methacrylnitril als Komponente C2, jeweils bezogen auf die Komponente C,

d) 0 bis 20 Gew.-% eines Copolymerisates wie Komponente C als Komponente D, wobei der Gew.-%-Anteil an Acrylnitril und/oder Methacrylnitril in Komponente C und Komponente D unterschiedlich ist.

e) 0,1 bis 20 Gew.-% eines zu Komponente A unterschiedlichen Polyesters als Komponente E,

f) 0,01 bis 10 Gew.-% mindestens eines Nukleierungsmittels und mindestens eines Umesterungsstabilisators, wobei das Massen-Verhältnis von Nukleierungsmittel zu Umesterungsstabilisator 1 : 100 bis 100 : 1, vorzugsweise 1 : 10 bis 10 : 1 und besonders bevorzugt 1 : 3 bis 3 : 1 ist, als Komponente F,

g) 0,1 bis 10 Gew.-% übliche Zusatzstoffe wie Ruß. UV-Stabilisatoren. Oxidationsverzögerer, Gleit- und Entformungsmittel als Komponente G

Nachfolgend werden die jeweils zueinander unterschiedlichen Komponenten im einzelnen erläutert.

Als Komponente A enthält die erfindungsgemäße Formmasse als restlicher Bestandteil bis zu 99,59 Gew.-% der Formmasse, bevorzugt 20 bis 75 Gew.-%, besonders bevorzugt 30 bis 60 Gew.-% eines vorzugsweise schmelzbaren Polykondensates, bevorzugt eines Polyesters und besonders bevorzugt eines aromatischen Polyesters. Die in den erfindungsgemäßen Formmassen enthaltenen Polykondensate sind an sich bekannt. Es ist bevorzugt, daß die Polykondensate eine Viskositätszahl (VZ) im Bereich von 40 bis 170, bevorzugt 80 bis 140 und besonders bevorzugt 100 bis 135 aufweisen.

Die Herstellung der Polyester kann vorzugsweise durch Reaktion von Terephthalsäure, deren Estern oder anderer esterbildender Derivate mit 1,4-Butandiol, 1,3-Propandiol bzw. 1,2-Ethandiol in an sich bekannter Weise erfolgen.

Bis zu 20 Mol-% der Terephthalsäure können durch andere Dicarbonsäuren ersetzt werden. Nur beispielsweise seien hier Naphthalindicarbonsäuren, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Auch bis zu 20 Mol-% der Dihydroxyverbindungen 1,4-Butandiol, 1,3 Propandiol bzw. 1,2-Ethandiol können durch andere Dihydroxyverbindungen, z.B. 1,6-Hexandiol, 1,4-Hexandiol, 1,4-Cyclohexandiol, 1,4-Di(hydroxymethyl) cyclohexan, Bisphenol A, Neopentylglykol, Mischungen dieser Diole sowie esterbildende Derivate derselben ersetzt werden.

Weiterhin bevorzugte aromatische Polyester sind Polytrimethylenterephthalat (PTT) und insbesondere Polybutylenterephthalat (PBT), die ausschließlich aus Terephthalsäure und den entsprechenden Diolen 1,2-Ethandiol, 1,3-Propandiol und 1,4-Butandiol gebildet sind. Die aromatischen Polyester können auch ganz oder teilweise in Form von Polyester-Recyclaten, wie PET-Mahlgut aus Flaschenmaterial oder aus Abfällen der Flaschenherstellung eingesetzt werden.

In einer besonders bevorzugten Ausrührungsform besteht die Komponente A aus

a1) 50 bis 100, bevorzugt 80 bis 100 Gew.-%, besonders bevorzugt 90 bis 100 Gew.-% Polybutylenterephthalat und

a2) 0 bis 50 Gew.-%, 0 bis 20 Gew.-%, besonders bevorzugt 0 bis 10 Gew.-% eines weiteren Polykondensats.

In einer weiteren erfindungsgemäßen Ausführungsform enthält die Formmasse kein PET. Darüber hinaus sind Formmassen bevorzugt, bei denen die Komponente A PET-frei ist.

Als Komponente B enthält die erfindungsgemäße Formmasse 1 bis 20 Gew.-%, bevorzugt 2 bis 8 Gew.-%, besonders bevorzugt 2,5 bis 7 Gew.-%, insbesondere 3 bis 6 Gew.-% mindestens eines teilchenförmigen Pfropfcopolymerisats mit einer Glasübergangstemperatur der Weichphase unterhalb von $0°C$ und einer mittleren Teilchengröße von 50 bis 1000 nm.

Vorzugsweise handelt es sich bei Komponente B um ein Pfropfcopolymerisat aus

b1) 50 bis 90 Gew.-% einer teilchenförmigen Pfropfgrundlage B1 mit einer Glasübergangstemperatur unterhalb $0°C$ und

b2) 10 bis 50 Gew.-% einer Pfropfauflage B2 aus den Monomeren

b21) 50 bis 90 Gew.-% eines vinylaromatischen Monomeren als Komponente B21 und

b22) 10 bis 50 Gew.-% Acrylnitril und/oder Methacrylnitril als Komponente B22.

Die teilchenförmige Pfropfgrundlage B1 kann aus 70 bis 100 Gew.-% eines $C_1$- bis $C_{10}$- konjugierten Diens oder beide, vorzugsweise eines $C_1$- bis $C_{10}$-Alkylesters der Acrylsäure, 0 bis 30 Gew.-% eines difunktionellen Monomeren mit zwei olefinischen, nicht konjugierten Doppelbindungen bestehen. Solche Pfropfgrundlagen werden beispielsweise bei ABS-Polymeren oder MBS-Polymeren als Komponente B eingesetzt.

Gemäß einer bevorzugten Ausführungsform der Erfindung besteht die Pfropfgrundlage B 1 aus den Monomeren

b11) 75 bis 99,9 Gew.-% eines $C_1$- bis $C_{10}$-Alkylesters der Acrylsäure als Komponente B11.

b12) 0,1 bis 10 Gew.-% mindestens eines polyfunktionellen Monomeren mit mindestens zwei olefinischen, nicht konjugierten Doppelbindungen als Komponente B12 und

b13) 0 bis 24,9 Gew.-% eines oder mehrerer weiterer copolymerisierbarer Monomeren als Komponente B13.

Bei der Pfropfgrundlage B1 handelt es sich um ein Elastomeres, welches eine Glasübergangstemperatur von bevorzugt unterhalb $-20°C$, besonders bevorzugt unterhalb $-30°C$, aufweist.

Für die Herstellung des Elastomeren werden als Hauptmonomere B11 Ester der Acrylsäure mit 1 bis 10 C-Atomen, insbesondere 4 bis 8 C-Atomen, in der Alkoholkomponente eingesetzt. Besonders bevorzugte Monomere B 11 sind iso- und n-Butylacrylat sowie 2-Ethylhexylacrylat, von denen Butylacrylat besonders bevorzugt ist.

Neben den Estern der Acrylsäure werden als vernetzendes Monomer B12 0,1 bis 10, bevorzugt 0,1 bis 5, besonders bevorzugt 1 bis 4 Gew.-% eines polyfunktionellen Monomeren mit mindestens zwei olefinischen nicht konjugierten Doppelbindungen eingesetzt. Beispiele sind Divinylbenzol, Diallylfumarat, Diallylphthalat, Triallylcyanurat, Triallylisocyanurat, Tricylodecenylacrylat und Dihydrodicyclopentadienylacrylat, von denen die beiden zuletzt genannten besonders bevorzugt sind.

Neben den Monomeren B11 und B12 können am Aufbau der Pfropfgrundlage B 1 noch bis zu 24,9, vorzugsweise bis zu 20 Gew.-% weiterer copolymerisierbarer Monomere, vorzugsweise Butadien-1,3, Styrol, $\alpha$-Methylstyrol, Acrylnitril, Methacrylnitril und $C_1$- bis $C_8$-Alkylester der Methacrylsäure oder Mischungen dieser Monomeren beteiligt sein. In einer besonders bevorzugten Ausführungsform enthält die Pfropfgrundlage B1 kein Butadien-1,3, insbesondere besteht die Pfropfgrundlage B1 ausschließlich aus den Komponenten B I und B12.

Auf die Pfropfgrundlage B 1 ist eine Pfropfauflage B2 aus den Monomeren

b21) 50 bis 90 Gew.-%, vorzugsweise 60 bis 90 Gew.-%, besonders bevorzugt 65 bis 80 Gew.-% eines vinylaromatischen Monomeren als Komponente B21 und

b22) 10 bis 50 Gew.-%, vorzugsweise 10 bis 40 Gew.-%, besonders bevorzugt 20 bis 35 Gew.-% Acrylnitril oder Methacrylnitril oder deren Mischungen

gepfropft.

Beispiele für vinylaromatische Monomere sind unsubstituiertes Styrol und substituierte Styrole wie $\alpha$-Methylstyrol, p-Chlorstyrol und p-Chlor-$\alpha$-methylstyrol. Bevorzugt sind unsubstituiertes Styrol und $\alpha$-Methylstyrol, besonders bevorzugt ist unsubstituiertes Styrol.

Gemäß einer Ausführungsform der Erfindung beträgt die mittlere Teilchengröße der Komponente B 50 bis 200 nm, bevorzugt 55 bis 150 nm.

Gemäß einer weiteren Ausführungsform der Erfindung beträgt die mittlere Teilchengröße der Komponente B 200 bis 1000 nm, bevorzugt 400 bis 550 nm.

Gemäß einer besonders bevorzugten Ausführungsform der Erfindung ist die Teilchengrößenverteilung der Komponente B bimodal, wobei die Komponente B zu 10 bis 90 Gew.-%, bevorzugt zu 30 bis 90 Gew.-%, besonders bevorzugt zu 50 bis 75 Gew.-% aus einem kleinteiligen Pfropfcopolymerisat mit einer mittleren Teilchengröße von 50 bis 200 nm, bevorzugt 55 bis 150 nm und zu 10 bis 90 Gew.-%, bevorzugt zu 10 bis 70 Gew.-%, besonders bevorzugt zu 25 bis 50 Gew.-% aus einem großteiligen Pfropfcopolymerisat mit einer mittleren Teilchengröße von 250 bis 1000 nm, bevorzugt ca. 400 bis 550 nm, besteht.

Als mittlere Teilchengröße bzw. Teilchengrößenverteilung werden die aus der integralen Massenverteilung bestimmten Größen angegeben. Bei den erfindungsgemäßen mittleren Teilchengrößen handelt es sich in allen Fällen um die Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$ und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar. Als Komponente A erfindungsgemäß verwendbare Emulsionspolymerisate A weisen vorzugsweise Q-Werte kleiner als 0,5, insbesondere kleiner als 0,35 auf.

Das Pfropfcopolymerisat B ist im allgemeinen ein- oder mehrstufig, d. h. ein aus einem Kern und einer oder mehreren Hüllen aufgebautes Polymerisat. Das Polymerisat besteht aus einer Grundstufe (Pfropfkern) B 1 und einer oder - bevorzugt - mehreren darauf gepfropften Stufen B2 (Pfropfauflage), den sogenannten Pfropfstufen oder Pfropfhüllen.

Durch einfache Pfropfung oder mehrfache Pfropfung können eine oder mehrere Pfropfhüllen auf die Kautschukteilchen aufgebracht werden, wobei jede Pfropfhülle eine andere Zusammensetzung haben kann. Zusätzlich zu den pfropfenden Monomeren können polyfunktionelle vernetzende oder reaktive Gruppen enthaltende Monomere mit aufgepfropft werden (s. z.B. EP-A 0 230 282, DE-A 36 01 419, EP-A O 269 861).

Gemäß einer Ausfütirtngsform der Erfindung dienen als Pfropfgrundlage B 1 vernetzte Acrylsäureester-Polymerisate mit einer Glasübergangstemperatur unter 0°C. Die vernetzten Acrylsäureester-Polymerisate sollen vorzugsweise eine Glasübergangstemperatur unter -20°C, insbesondere unter -30°C, besitzen.

Prinzipiell ist auch ein mehrschaliger Aufbau des Pfropfcopolymerisats möglich, wobei mindestens eine innere Schale eine Glasübergangstemperatur von unter 0°C und die äußerste Schale eine Glasübergangstemperatur von mehr als 23°C aufweisen sollte.

In einer bevorzugten Ausführungsform besteht die Pfropfauflage B2 aus mindestens einer Pfropfhülle und die äußerste Pfropfhülle davon hat eine Glasübergangstemperatur von mehr als 30°C, wobei ein aus den Monomeren der Pfropfauflage B2 gebildetes Polymer eine Glasübergangstemperatur von mehr als 80°C aufweisen würde.

Geeignete Herstellverfahren für Pfropfcopolymerisate B sind die Emulsions-, Lösungs-, Masse- oder Suspensionspolymersiation. Bevorzugt werden die Pfropfcopolymerisate B durch radikalische Emulsionspolymerisation hergestellt, bei Temperaturen von 20°C bis 90°C unter Verwendung wasserlöslicher und/oder öllöslicher Initiatoren wie Peroxodisulfat oder Benzylperoxid, oder mit Hilfe von Redoxinitiatoren. Redoxinitiatoren eignen sich auch zur Polymerisation unterhalb von 20°C.

Geeignete Emulsionspolymerisationsverfahren sind beschrieben in DE-A-28 26 925, DE-A31 49 358 und in DE-C-12 60 135.

Der Aufbau der Pfropfhüllen erfolgt vorzugsweise im Emulsionspolymerisationsverfahren, wie es beschrieben ist in den DE-A-32 27 555, 31 49 357, 31 49 358, 34 14 118. Das definierte Einstellen der erfindungsgemäßen Teilchengrößen von 50 bis 1000 nm erfolgt bevorzugt nach den Verfahren, die beschrieben sind in der DE-C-12 60 135 und DE-A-28 26 925, bzw. Applied Polymer Science, Band 9 (1965), Seite 2929. Das Verwenden von Polymerisaten mit unterschiedlichen Teilchengrößen ist beispielsweise bekannt aus DE-A-28 26 925 und US 5,196,480.

Als Komponente C enthalten die erfindungsgemäßen Formmassen 0,1 bis 20 Gew.-%, bevorzugt 5 bis 15 Gew.-%, besonders bevorzugt 8 bis 12 Gew.-%, eines Copolymerisates aus den Monomeren

c1) 50 bis 90 Gew.-%, bevorzugt 75 bis 90 Gew.-%, besonders bevorzugt 85 bis 80 Gew.-%, mindestens eines vinylaromatischen Monomeren als Komponente C1 und

c2) 10 bis 50 Gew.-%, vorzugsweise 10 bis 25 Gew.-%, und insbesondere 15 bis 19 Gew.-%, Acrylnitril und/oder Methacrylnitril als Komponente C2.

Als vinylaromatische Monomere sind die oben stehend genannten Monomere C1 und die oben stehend als Komponente B21 genannten vinylaromatischen Monomere geeignet. Vorzugsweise ist Komponente C ein amorphes Polymerisat, wie es vorstehend als Pfropfauflage B2 beschrieben ist. Gemäß einer Ausführungsform der Erfindung wird als Komponente C ein Copolymerisat von Styrol und/oder $\alpha$-Methylstyrol mit Acrylnitril verwendet. Der Acrylnitrilgehalt in diesen Copolymerisaten der Komponente C liegt dabei nicht oberhalb 25 Gew.-% und beträgt im allgemeinen 10 bis 25 Gew.-%, bevorzugt 10 bis 22 Gew.-%. besonders bevorzugt 10 bis 19 Gew.-%, insbesondere 15 bis 19 Gew.-%.

Bei einer weiteren Ausführungsform eines Copolymeren der Komponente C handelt es sich vorzugsweise um ein Styrol/Acrylnitril-Copolymerisat, ein $\alpha$-Methylstyrol/-Acrylnitril-Copolymerisat oder ein $\alpha$-Methylstyrol/Styrol/ Acrylnitril-Terpolymerisat. Wesentlich ist, daß der Gehalt an Acrylnitril in diesen Copolymerisaten 25 Gew.-%, insbesondere 19 Gew.-% nicht übersteigt und mindestens bei 1 Gew.-% liegt. Die Copolymerisate können einzeln oder auch als Gemisch für die Komponente C eingesetzt werden, so daß es sich bei der zusätzlichen, separat hergestellten Komponente C der erfindungsgemäßen Formmassen beispielsweise um ein Gemisch aus einem Styrol/Acrylnitril-Copolymerisat (PSAN) und einem $\alpha$-Methylstyrol/Acrylnitril-Copolymerisat handeln kann. Auch der Acrylnitrilgehalt der verschiedenen Copolymerisate der Komponente C kann unterschiedlich sein. Vorzugsweise besteht die Komponente C jedoch nur aus einem oder mehreren Styrol/Acrylnitril-Copolymerisaten, wobei die Copolymerisate einen unterschiedlichen Gehalt an Acrylnitril aufweisen können. In einer besonders bevorzugten Ausführungsform besteht die Komponente C aus nur einem Styrol/Acrylnitril-Copolymerisat.

Als Komponente D enthalten die erfindungsgemäßen Formmassen 0 bis 20 Gew.-%, bevorzugt 0,1 bis 12,5 Gew.-%, besonders bevorzugt 5 bis 7,5 Gew.-% eines Copolymerisats wie in Komponente C, wobei der Gew.-%-Anteil an Acrylnitril und/oder Methacrylnitril, vorzugsweise Acrylnitril, in Komponente C und D unterschiedlich ist. Vorzugsweise liegt der Acrylnitril- und/oder Methacrylnitrilanteil des Copolymerisats der Komponente D über dem in der Komponente C.

Gemäß einer Ausführungsform der Erfindung wird als Komponente D ein Copolymerisat von Styrol und/oder $\alpha$-Methylstyrol mit Acrylnitril verwendet. Der Acrylnitrilgehalt in diesen Copolymerisaten der Komponente C liegt dabei oberhalb 25 Gew.-% und beträgt im allgemeinen >25 bis 40 Gew.-% und inbesondere > 25 bis 35 Gew.-%.

Bei einer weiteren Ausführungsform eines Copolymeren der Komponente D handelt es sich vorzugsweise um ein Styrol/Acrylnitril-Copolymerisat, ein $\alpha$-Methylstyrol/-Acrylnitril-Copolymerisat oder ein $\alpha$-Methylstyrol/Styrol/ Acrylnitril-Terpolymerisat. Bevorzugt ist auch hier, daß der Gehalt an Acrylnitril in diesen Copolymerisaten im Bereich von > 25 bis 40 und bevorzugt von > 25 bis 35 Gew.-% liegt. Die Copolymerisate können einzeln oder auch als Gemisch für die Komponente D eingesetzt werden, so daß es sich bei der zusätzlichen, separat hergestellten Komponente D der erfindungsgemäßen Formmassen beispielsweise um ein Gemisch aus einem Styrol/Acrylnitril-Copolymerisat (PSAN) und einem $\alpha$-Methylstyrol/Acrylnitril-Copolymerisat handeln kann. Auch der Acrylnitrilgehalt der verschiedenen Copolymerisate der Komponente D kann unterschiedlich sein. Vorzugsweise besteht die Komponente D jedoch nur aus einem oder mehreren Styrol/Acrylnitril-Copolymerisaten, wobei die Copolymerisate einen unterschiedlichen Gehalt an Acrylnitril aufweisen können. In einer besonders bevorzugten Ausführungsform besteht die Komponente C aus nur einem Styrol/Acrylnitril-Copolymerisat.

Ferner enthält die erfindungsgemäße Formmasse 0,1 bis 20, bevorzugt 0,1 bis 15 und besonders bevorzugt 0,1 bis 10 Gew.-%, bezogen auf die gesamte Formmasse, eines zu Komponente A unterschiedlichen Polyesters als Komponente E. Der Polyester der Komponente E weist mindestens 50, bevorzugt mindestens 70 und besonders bevorzugt 100 Gew.-% Polyethylenterephthalat (PET), bezogen auf die Komponente E, auf. Als weitere Polyester der Komponente E sind die bereits voranstehend definierten aromatischen Polyester bevorzugt. Das PET kann sowohl direkt aus der Synthese stammend als auch als Recyclat, vorzugsweise aus Mahlgut aus PET-Flaschen, eingesetzt werden. PET-Recyclat einzusetzen bietet sich zum einen aus Kostengründen und zum anderen wegen der die Zähigkeit der Formmasse verbessernden Wirkung des PET-Recyclats an. Damit besteht das erfindungsgemäß in Komponente E eingesetzte PET vorzugsweise aus mindestens 50, bevorzugt mindestens 80 und besonders bevorzugt zu 100 % aus PET-Recyclat.

Weiterhin enthält die erfindungsgemäße Formmasse 0,01 bis 10, bevorzugt 0,02 bis 5 und besonders bevorzugt 0,05 bis 2 Gew.-% mindestens eines Nukleierungsmittels und mindestens eines Umesterungsstabilisators, wobei das Verhältnis von Nukleierungsmittel zu Umesterungsstabilisator 0 : 1 bis 1 : 10, bevorzugt 5 : 1 bis 1 : 5 und besonders bevorzugt 2,5 : 1 bis 1 : 2,5 ist, als Komponente F.

In der erfindungsgemäßen Formmasse ist es bevorzugt, daß das Nukleierungsmittel in Komponente F ein teilchenförmiger Feststoff mit einer Korngröße im Bereich von 0,1 bis 15 μm, oder der Umesterungsstabilisator mindestens eine phosphorhaltige Verbindung, oder das Nukleierungsmittel ein überwiegend anorganischer. teilchenförmiger Feststoff mit einer Korngröße im Bereich von 0,1 bis 15 μm und der Umesterungsstabilisator mindestens eine phosphorhaltige Verbindung ist.

Derartige, den Umesterungsstabilisator bildende Verbindungen können sowohl organische als auch anorganische Phosphorverbindungen sein. Als organische Phosphorverbindungen sind insbesondere organische Phosphite bevorzugt. Ein derartiges Phosphit ist Tetrakis-(2,4-di-tert-butylphenyl)-bisphenyl-diphosphit (Igaphos® PEPQ der Firma Ciba Geigy AG). Als anorganische Phosphorverbindungen kommen insbesondere anorganische Phosphate, beispielsweise Monozinkphosphate, insbesondere als Mono- oder Dihydrat oder deren Gemische, in Betracht, wobei Monozinkphosphatdihydrat besonders bevorzugt ist. Vorzugsweise wird der Umesterungskatalysator im Bereich von 0,01 bis 5, bevorzugt 0,05 bis 2 und besonders bevorzugt 0,1 bis 0,3 Gew.-%, bezogen auf die Formmasse, eingesetzt.

Der Begriff "Umesterungsstabilisator" ist mit den in der Fachsprache verwendeten Begriffen "Umesterungsschutz" bzw. "Umesrerungsinhibitor" gleichzusetzen.

Die Wirkungsweise derartiger Umesterungsinhibitoren ist, daß sie Reste des Katalysators, der bei der Synthese von Polyestern benötigt wird, deaktivieren. Bei diesen Katalysatoren handelt es sich um titanorganische Verbindungen wie beispielsweise Alkyltitanate. Diese sind in der Lage, über freie Koordinationsstellen Estergruppen zu aktivieren bzw. Umesterungsreaktionen zu initiieren. Hierbei kommt es zur Bildung von Copolyestern, die sich durch eine geringere Kristallinität auszeichnen, wodurch die unerwünschte Klebeneigung bei der Entformung von Spritzgußteilen verstärkt wird. Bei der Verwendung der oben beschriebenen Umesterungsinhibitoren werden diese koordinativ an das Titanat gebunden; der daraus resultierende Zn/Ti-Komplex ist gegenüber den Estergruppen inaktiv.

Als teilchenförmiger Feststoff für das Nukleierungsmittel kommen sowohl überwiegend organische als auch überwiegend anorganische Materialien in Betracht, wobei die anorganischen bevorzugt sind. Als überwiegend organische Materialien sind vor allem Natriumphenylphosphenat oder Polytetrafluorethylen zu nennen. Die anorganischen Materialien lassen sich in zwei Gruppen, nämlich in auf Aluminium bzw. auf Silicium basierende Materialien einteilen, wobei die auf Silicium basierenden, insbesondere die auf Siliciumoxide basierenden, besonders bevorzugt sind. Hierunter haben sich neben Silicium auch noch Magnesium enthaltende Materialien besonders bewährt. Als Nukleierungsmittel besonders bevorzugt ist demnach Talkum. Die erfindungsgemäße Formmasse beinhaltet vorzugsweise im Bereich von 0,01 bis 5, bevorzugt 0,02 bis 1 und besonders bevorzugt 0,05 bis 0,2 Gew.-% Nukleierungsmittel.

Weiterhin läßt sich die Komponente F zur Verringerung der Haftfähigkeit der erfindungsgemäßen Formmassen einsetzen. Insbesondere wird die Haftfähigkeit der Formmassen an der Oberfläche von Spritzgußformen verringert. Besonders bevorzugt ist eine Verringerung der Haftfähigkeit in dem Bereich der Verarbeitungstemperatur der erfindungsgemäßen Formmasse und besonders in einem Temperaturbereich von 200 bis 300, bevorzugt 250 bis 300°C, der bei dem Spritzgußvorgang herrscht.

Damit ist der Vorteil verbunden, daß zum einen der Formmasse keine haftvermindernden Mittel zugesetzt werden müssen, beispielsweise weniger als 0,5 Gew.-%, bezogen auf die Formmasse, und zum anderen die Oberfläche der Spritzgußform nicht mit haftvermindernden Mitteln versehen werden muß.

Derartige haftvermindernde Mittel sind die dem Fachmann für derartige Formmassen bekannten. Damit ist sowohl der Spritzgußvorgang als auch die Formmasse vorzugsweise frei von haftvermindernden Mitteln.

Als Komponente G enthalten die erfindungsgemäßen Formmassen 0,1 bis 10 Gew.-% übliche Zusatzstoffe. Als solche Zusatzstoffe seien beispielsweise genannt: UV-Stabilisatoren, Oxidationsverzögerer, Gleit- und Entformungsmittel, Farbstoffe, Pigmente, Färbemittel, Antistatika, Antioxidantien, Stabilisatoren zur Verbesserung der Thermostabilität, zur Erhöhung der Lichtstabilität, zum Anheben der Hydrolysebeständigkeit und der Beständigkeit gegen Chemikalien, Mittel gegen die Wärmezersetzung und insbesondere die Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder andere spezielle Effekte) des Zusatzstoffes auszunutzen. Wärmestabilisatoren bzw. Oxidationsverzögerer sind üblicherweise Metallhalogenide (Chloride, Bromide, Iodide), die sich von Metallen der Gruppe I des Periodensystems der Elemente ableiten (wie Li, Na, K, Cu).

Geeignete Stabilisatoren sind die üblichen gehinderten Phenole, aber auch Vitamin E bzw. analog aufgebaute Verbindungen. Auch HALS-Stabilisatoren (Hindered Amine Light Stabilizers), Benzophenone, Resorcine, Salicylate, Benzotriazole und andere Verbindungen sind geeignet (beispielsweise Irganox®, Tinuvin®, wie Tinuvin® 770 (HALS-Absorber, Bis (2,2,6,6-tetramethyl-4-piperidyl)-sebacat) oder Tinuvin®P (UV-Absorber - (2H-Benzotriazol-2-yl)-4-methylphenol), Topanol®). Diese werden üblicherweise in Mengen von bis zu 2 Gew.-% (bezogen auf das Gesamtgemisch) verwendet.

Geeignete Gleit- und Entformungsmittel sind Stearinsäure, Stearylalkohol, Stearinsäureester bzw. allgemein höhere Fettsäuren, deren Derivate und entsprechende Fettsäuregemische mit 12 bis 30 Kohlenstoffatomen. Die Mengen dieser Zusätze liegen im Bereich von 0,05 bis 1 Gew.-%.

Auch Siliconöle, oligomeres Isobutylen oder ähnliche Stoffe kommen als Zusatzstoffe in Frage; die üblichen Mengen betragen 0,05 bis 5 Gew.-%. Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar.

Verarbeitungshilfsmittel und Stabilisatoren wie UV-Stabilisatoren, Schmiermittel und Antistatika werden üblicherweise in Mengen von 0,01 bis 5 Gew.-% verwendet, bezogen auf die gesamte Formmasse.

Weichmacher, wie Phthalsäuredioctylester, Phthalsäuredibenzylester, Phthalsäurebutylbenzylester, Kohlenwasserstofföle, N-(n-Butyl)-benzolsulfonamid, o- und p-Toluolethylsulfonamid werden vorteilhaft in Mengen bis etwa 5 Gew.-%, bezogen auf die Formmasse, zugesetzt. Färbemittel, wie Farbstoffe und Pigmente können in Mengen bis zu etwa 5 Gew.-%, bezogen auf die Formmasse, zugesetzt werden.

Zudem ist es bevorzugt, daß die erfindungsgemäße Formmasse eine Komponente G mit einem Copolymer aufweist, das kein Butadien- oder Isoprenderivat oder keines von beiden enthält.

Als Komponente H enthalten die erfindungsgemäßen Formmassen zusätzlich 0 bis 30, bevorzugt 0 bis 20 und besonders bevorzugt 0,1 bis 12 Gew.-% ihrer Masse eines Polycarbonats. Als Polycarbonate sind alle dem Fachmann bekannten Polycarbonate geeignet, wobei die schmelzbaren besonders geeignet sind. In diesem Zusammenhang wird auf "Polymer Chemistry, An Introduction", 2$^{nd}$ Edition, Malcolm P. Stevens Oxford University Press, 1990, Seiten 400 bis 403 und "Principles of Polymerisation", 2$^{nd}$ Edition, George Odian, Whiley Interscience Publication John Whiley & Sons, 1981, Seiten 146 bis 149 verwiesen. Besonders geeignete Polycarbonate weisen eine hohe Fließfähigkeit, vorzugsweise eine MVR bei 300°C und 1,2 kp von > 9, bevorzugt >13 und besonders bevorzugt >20 cm$^3$/10 min auf, wobei bevorzugte Komponenten H eine MVR nach ISO 1133 von maximal 100, bevorzugt 90 und besonders bevorzugt 50 cm$^3$/10 min zeigen. Insbesondere als Komponente H bevorzugt ist Lexan 121R der Firma General Electric Plastics. Weiterhin hat sich der Einsatz von PC-Recyclat sowohl als "Post Industrial-" als auch als "Post Consumer-Recyclat" als besonders geeignet herausgestellt, da es sich besonders gut verarbeiten läßt. In einer erfindungsgemäß bevorzugten Ausführungsform ist die Formmasse polycarbonatfrei.

Zudem kann die erfindungsgemäße Formmasse zusätzlich zu 0 bis 30 Gew.-% ihrer Masse ein Polycarbonat als Komponente H und von 0,1 bis 100, bevorzugt 1 bis 50 und besonders bevorzugt 10 bis 30 Gew.-% ihrer Masse eine Faser als Komponente I oder in einer Ausführungsform beides enthalten.

Derartige Fasern haben im allgemeinen eine mittlere Länge von 0,1 bis 0,5, vorzugsweise 0,1 bis 0,4 mm, und einen Durchmesser im Bereich von 6 bis 20 μm. Bevorzugt sind Glasfasern und Mineralfasern, insbesondere Glasfasern, vorzugsweise aus E-Glas. Zur Erzielung einer besseren Haftung können die Fasern mit Organosilanen, Epoxysilanen oder anderen Polymerüberzügen beschichtet sein.

Das Mischen der Komponenten kann nach jeder beliebigen Weise nach allen bekannten Methoden erfolgen. Beim Mischen können die Komponenten als solche oder auch in Form von Mischungen der einen Komponente mit einer oder mehreren der anderen Komponenten eingesetzt werden. Beispielsweise kann die Komponente B mit einem Teil oder der gesamten Komponente C oder D vorgemischt und anschließend mit den übrigen Komponenten gemischt werden. Wenn die Komponenten B, C und D beispielsweise durch Emulsionspolymerisation hergestellt worden sind, ist es möglich, die erhaltenen Polymerdispersionen miteinander zu vermischen, darauf die Polymerisate gemeinsam auszufällen und das Polymerisatgemisch aufzuarbeiten. Vorzugsweise erfolgt jedoch das Abmischen der Komponenten B, C und D durch gemeinsames Extrudieren, Kneten oder Verwalzen der Komponenten, wobei die Komponenten B, C und D, sofern erforderlich, zuvor aus der bei der Polymerisation erhaltenen Lösung oder wäßrigen Dispersion isoliert worden sind. Die erfindungsgemäßen thermoplastischen Formmassen können beispielsweise hergestellt werden, indem man die Komponente A mit jeweils den Komponenten B, C oder D mit einer Mischung aus diesen, und gegebenenfalls mit den weiteren Komponenten mischt, in einem Extruder aufschmilzt und die Fasern über einen Einlaß am Extruder zuführt.

Die erfindungsgemäßen Formmassen können nach den bekannten Verfahren der Thermoplastverarbeitung zu Formteilen verarbeitet werden. Insbesondere kann deren Herstellung durch Thermoformen, Extrudieren, Spritzgießen, Kalandrieren, Hohlkörperblasen, Pressen, Preßsintern, Tiefziehen oder Sintern, vorzugsweise durch Spritzgießen, erfolgen. Die aus den erfindungsgemäßen Formmassen hergestellten Formteile sind ebenfalls Gegenstand der vorliegenden Erfindung.

Die aus den erfindungsgemäßen Formmassen hergestellten Formteile weisen nur geringe Emissionen an flüchtigen Bestandteilen mit einem wahrnehmbaren Geruch auf. Das Geruchsverhalten von Polymerwerkstoffen wird nach DIN 50011 / PV 3900 beurteilt und gilt für Bauteile des Fahrzeuginnenraums. Das Ergebnis der Geruchsprüfung nach dieser Norm ist im Falle der erfindungsgemäßen Formteile im allgemeinen besser als Note 5, bevorzugt besser als Note 4,5 und besonders bevorzugt besser als Note 4. Die Kohlenstoff-Emission der Formteile nach PV 3341 ist im allgemeinen < 50 µg/g, bevorzugt < 40 µg/g, besonders bevorzugt < 35 µg/g. Die Untergrenze liegt vorzugsweise bei 20 µg/g.

Die erfindungsgemäßen Formteile weisen weiterhin eine gute Wärmeformbeständigkeit auf. Die Vicat B-Erweichungstemperatur ist im allgemeinen > 120°C, bevorzugt > 125°C und besonders bevorzugt 130°C. Vorzugsweise liegt die Obergrenze der Vicat B-Erweichungstemperatur bei 160°C.

Die erfindungsgemäßen Formteile weisen ferner eine gute Schlagzähigkeit, auch in der Kälte auf. Diese äußert sich darin, daß die aus den erfindungsgemäßen Fonnmassen gebildeten Formteile keinen Bruch selbst bei tiefen Temperaturen zeigen.

Bei faserverstärkten Formteilen liegt vorzugsweise das Elastizitätsmodul bei > 2000, bevorzugt > 3500 MPa, maximal bei 15000 MPa, ihre Streckspannung im allgemeinen > 40, bevorzugt > 70 MPa, jedoch vorzugsweise maximal bei 150 MPa, ihre Schlagzähigkeit nach ISO 179/1eU ist bruchfrei, vorzugsweise liegt sie im Bereich von 30 bis 80 kJ/$m^2$ und ihre Fließfähigkeit als MVR (Melt-Volume-Ratio 275°C/2,16 kp Auflagekraft gemäß ISO 1133) ist > 10, bevorzugt > 15 $cm^3$/10 min, jedoch maximal bei 30 $cm^3$/10 min.

Die erfindungsgemäßen Formteile weisen auch nach 1000 h dauernder Wärmelagerung bei 130°C bei-30°C kein Splitterverhalten im Durchstoßversuch (2 und 3 mm Plattendurchmesser, gemäß ISO 6603/2) auf.

Darüber hinaus liegt erfindungsgemäß die Dichte der Formmasse im Bereich von 1,1 bis 1,5, vorzugsweise von 1,2 bis 1,4 und besonders bevorzugt von 1.2 bis 1,3 $g/cm^3$.

Formteile mit einem oder mehreren der Merkmale i) bis vii)

i) Kohlenstoff-Emission nach PV 3341 < 50 µg C/g

ii) Ergebnis der Geruchsprüfung nach DIN 50 011/PV 3900 besser als Note 5;

iii) Vicat B-Erweichungstemperatur > 120 °C;

iv) Dichte im Bereich von 1.1 bis 1,5 $g/m^3$;

v) Fließfähigkeit als Melt-Volume-Ratio bei 275°C und 2,16 kp nach ISO 1133 von > 10 $cm^3$/10 min;

vi) Schlagzähigkeitabnahme nach ISO 179/1eU nach einer 1000 h dauernder Wärmelagerung bei 120°C von < 30 % gegenüber vor der Wärmelagerung;

vii) Bruchdehnung nach DIN 53457 nach 1000 h dauernder Wärmelagerung bei 130°C > 2%,

stellen eine erfindungsgemäße Ausführungsform dar.

Weiterhin betrifft die Erfindung ein Laminat, das ein erfindungsgemäßes Formteil und einen Polykondensatschaum beinhaltet. Vorteilhafterweise sind Formteil und Polykondensatschaum über ihre Oberflächen miteinander fest verbunden. Die Laminate zeichnen sich durch eine hervorragende Schaumhaftung des Schaumes an der Formteiloberfläche aus, ohne daß eine Vorbehandlung der Formteiloberfläche, beispielsweise durch einen Primer, notwendig ist. Beim Abziehen oder Abschälen des Schaums von der Formteiloberfläche wird Kohäsionsbruch beobachtet; es verbleiben Schaumreste auf der Oberfläche. Für den Polykondensatschaum können alle dem Fachmann bekannten schäumbaren Polykondensate eingesetzt werden. Es ist in einer weiteren erfindungsgemäßen Ausführungsform bevorzugt, daß auf die Formteiloberflächen der Schaum ohne die Verwendung eines Primers aufgebracht wird. Unter diesen Polykondensaten sind Polyamide und Polyurethane bevorzugt und Polyurethane besonders bevorzugt. Bei den Polyurethanschäumen sind wiederum Halbhart- und Weichschäume besonders bevorzugt; diese können gegebenenfalls Haftvermittler beinhalten. Insbesondere wird als Polyurethanschaum das Produkt Elastoflex® der Elastogran GmbH, Lemförde, eingesetzt. Weitere geeignete Polyurethane sind im Kunststoffhandbuch Band 7 "Polyurethane", 3. Auflage, 1993, Karl Hanser Verlag München. Wien, zu entnehmen.

Ferner eignen sich die erfindungsgemäßen Formmassen und nachfolgenden Formteile bzw. Gebilde zum Recyceln. Die aus den erfindungsgemäßen Formmassen und Formteilen gewonnen Recyclate lassen sich wieder zu Formteilen verarbeiten, die mindestens eine der zuvor beschriebenen Materialeigenschaften aufweisen. Derartige Recyclat-Formteile weisen mindestens 10, bevorzugt mindestens 20 und besonders bevorzugt mindestens 70 Gew.-%, bezogen auf das Formteil, Recyclat auf. Das Recycling erfolgt nach dem Fachmann allgemein bekannten Verfahren. Die erfindungsgemäßen Formmassen erleichtern insbesondere das Zerkleinern und das thermische Recyclieren der Formteile. In diesem Zusammenhang sind dienfreie Formmassen besonders bevorzugt.

Für das Recyclen der Formteile, die aus den erfindungsgemäßen Formmassen bestehen, sind prinzipiell zwei Alternativen möglich:

(a) werkstoffliches Recyclen, d.h. die Gewinnung des reinen Polymerwerkstoffes und Zuführung in Prozesse der Schmelzverarbeitung von Polymeren wie Extrusions-, Preß-, Knet- oder Spritzgußprozesse; oder

(b) chemisches Recyclen (Rohstoffrecyclen) durch Hydrolyse oder Pyrolyse der Polymermasse und anschließende destillative und/oder extraktive Aufbereitung unter Bedingungen, die dem Fachmann allgemein bekannt sind. Die dadurch gewonnenen Rohstoffe können in weiteren Prozessen wiederverwendet werden.

Beim Recyclen der erfindungsgemäßen Verbunde bzw. der daraus hergestellten Gebilden setzt die Recyclingtechnik die üblichen Schritte wie die Demontage leicht zu trennender Werkstoffe sowie Befestigungselemente, das Abschälen von Polyurethanschaum, wenn dieser auf die erfindungsgemäßen Verbunde aufgebracht wurde, das Zerkleinern, das Trennen und Klassieren, weitere Aufbereitungsschritte wie Mischen und Homogenisieren in dafür geeigneten Vorrichtungen, das Reinigen und Entstauben unter dem Fachmann allgemein bekannten Verfahrensbedingungen voraus. Dem folgt die Wiederverarbeitung des Polymeren in der vorstehend beschriebenen Weise.

Aufgrund der oben genannten Eigenschaften, insbesondere der Wärmealterungsund der Wärmeformbeständigkeit, eignen sich die erfindungsgemäßen Formmassen oder Formteile oder Laminate oder Recyclate oder mindestens zwei davon für die Verwendung in Gebilden, insbesondere für Anwendungen im Innenbereich von Kraftfahrzeugen oder für Karosserieaußenteile von Kraftfahrzeugen.

Weiterhin betrifft die Erfindung Gebilde, vorzugsweise für den Innenraum von Kraftfahrzeugen oder für Karosserieaußenteile von Kraftfahrzeugen, beinhaltend erfindungsgemäße Formmassen oder Formteile oder Laminate oder Recyclate oder mindestens zwei davon.

Besonders bevorzugt ist es, daß die erfindungsgemäßen Formteile oder Gebilde laserbemusterbar sind.

Erfindungsgemäße Formteile bzw. Gebilde für den Kraftfahrzeuginnenraum sind daher vorzugsweise Abdeckungen, Ablagefächer, Instrumententafelträger, Türbrüstungen, Teile für die Mittelkonsole sowie Halterungen für Radio und Klimaanlage, Blenden für die Mittelkonsole, Blenden für Radio, Klimaanlage und Aschenbecher, Verlängerungen der Mittelkonsole, Stautaschen, Ablagen für die Fahrer- und Beifahrertür, Ablagen fiir die Mittelkonsole, Bauteile für den Fahrerund den Beifahrersitz, wie Sitzverkleidungen, Lichtschaltergehäuse, Lampengehäuse, Gehäuse für die Fahrzeugelektronik, wie Antiblockiersystem-, Antischlupfregelung-, elektronische Stabilitätsregelungs-, Getriebe-, Sitz-, Spiegelmotor-, Fensterhebermotor-, Verdecksteuerungs-, Airbagauslöse-, Sitzbelegungserkennungs-, Innenraumsicherungs-, Beschleunigungssensor- und Zündelektronik, Steckerleisten, Steckverbinder, Schließanlagengehäuse, Wischergehäuseabdeckungen, Schloßgehäuse sowie Gepäckträgerdachleisten, Defrosterkanal, Innenspiegelgehäuse, Schiebedachelemente wie Schiebedachrahmen, Instrumentenhutzen- und Blenden, Instrumentenfassungen, Ober- und Unterschale für den Lenkstock, Luftführungskanäle, Luftausströmer und Zwischenstücke für Personenanströmer und Defrosterkanal, Türseitenverkleidungen, Verkleidungen im Kniebereich, Luftaustrittsdüsen, Entfrosteröffnungen, Schalter und Hebel. Diese Anwendungen stehen nur beispielhaft für denkbare Kraftfahrzeug-Innenanwendungen und sind nicht auf Kraftfahrzeug-Innenanwendungen beschränkt.

Weiterhin sind als Formteile bzw. Gebilde für Karosserieaußenteile, insbesondere Kotflügel, Heckklappen, Seitenverkleidungen, Stoßstangen, Beplankungen, Kennzeichentafelträger, Blenden, Schiebedachplatten oder -rahmen sowie Stoßfänger oder deren Bestandteile bevorzugt.

Zudem seien Bootskörper, Rasenmähergehäuse, Gartenmöbel, Motorradteile Kameragehäuse, Handygehäuse, Stutzen für Ferngläser, Wrasenkanäle für Dunstabzugshauben, Teile für Dampfkochtöpfe, Gehäuse für Heißluftgrills und Pumpengehäuse nur beispielhaft als weitere, nicht auf den Kraftfahrzeugbereich begrenzte, Formkörper bzw. Gebilde genannt.

Im Vergleich zu den vorstehenden Formteilen bzw. Gebilden hat sich die Verwendung der Formmassen insbesondere bewährt bei Steckverbindern. Gehäuseteilen. insbesondere für die Kfz-Elektronik, wie insbesondere ABS/ASR-, ESP-Getriebe-, Sitz-, Spiegelmotor-, Fensterhebermotor-, Verdecksteuerungs-, Airbagauslöse-, Innenraumsicherungs-, Beschleunigungssensor- und Zündelektronik sowie auch bei der Elektronik zur Erkennung der Sitzbelegung. Ferner ist es bevorzugt, die erfindungsgemäßen Formmassen fiir Schließanlagengehäuse, Autorelais, Deckel für Wischergehäuse sowie für Schloßgehäuse zu verwenden.

Eine andere bevorzugte Gruppe von aus den erfindungsgemäßen Formmassen herstellbaren Formteilen oder Gebilden sind Gaszählergehäuse. Windleitschaufeln, Stellmotorgehäuse, wobei die Stellmotoren vorzugsweise im Kfz-Bau eingesetzt werden, Bohrmaschinenteile, Ofenteile, insbesondere zur Wärmeisolierung, wie Halteknöpfe und Ofengriffe, Scheibenwischerteile, insbesondere Wischerblatthalterungen, Spoiler, Spiegelträgerplatten für Kfz-Spiegel, sowie Gehäuse für Waschmaschinensteuerungen.

Ferner sind die erfindungsgemäßen Formmassen für andere, im Haushaltsbereich, vorzugsweise im Küchenbereich, eingesetzte Formkörper geeignet. Hierzu zählen Brotbackmaschinen, Toaster, Tischgrills, Küchenmaschinen, elektrische Dosenöffner und Saftpressen. Bei diesen Gegenständen werden aus den erfindungsgemäßen Formmassen vorzugsweise Schalter, Gehäuse, Griffe und Deckel hergestellt. Weiterhin lassen sich die erfindungsgemäßen Formmassen für Formteile von Herden verwenden. Bei Herden sind Herdgriffe, Herdknöpfe und Schalter besonders bevorzugt.

Eine andere Verwendung der erfindungsgemäßen Formmassen liegt in Formteilen vor, die den Anforderungen der Federal Drug Administration oder vergleichbarer nationaler Behörden anderer Länder entsprechen. In diesem Bereich sind insbesondere Arzneimittelverpackungen und Gebinde für Arzneimittelkits bevorzugt.

Zudem lassen sich die erfindungsgemäßen Formmassen im Bereich der Lebensmittelverpackung einsetzen. Hier sind Formteile aus den erfindungsgemäßen Formmassen wie Schachteln, Töpfe, Schalen und Behältnisse anderer Art bevorzugt.

Im Zusammenhang mit den Verwendungen der erfindungsgemäßen Formmassen ist insbesondere deren Lebensmittelechtheit und Fett- sowie Flüssigkeitsresistenz, die sich insbesondere bei Teilen von Haushaltsgeräten positiv auswirkt, hervorzuheben.

Besonders bewährt hat sich der Einsatz der vorstehend definierten Formmassen zur Herstellung von Formteilen, die hohen Temperaturbelastungen ausgesetzt sein können. Derartige Formteile sind insbesondere Scheinwerferteile, die in dem Bereich des Scheinwerfers eingesetzt werden, in dem während des Betriebs des Scheinwerfers Temperaturen über 100°C, bevorzugt 110°C und besonders bevorzugt 130°C und maximal bis 200°C auftreten können. Derartige Teile können sowohl glasfaserverstärkt als auch glasfaserunverstärkt sein.

Der Vorteil des Einsatzes der erfindungsgemäßen Formmassen liegt insbesondere darin, daß es bei derartigen Scheinwerferteilen mit reflektierender metallisierter Oberfläche zu keiner Ermattung dieser Oberflächen kommt. Weiterhin führt der Einsatz der erfindungsgemäßen Formmassen dazu, daß es auch bei längerem Betrieb des Scheinwerfers nicht zu Ablagerungen auf den transparenten Bereichen des Scheinwerfers, durch die das Licht tritt, kommt und die Reflexionseigenschaften von metallisierten Oberflächen dieser Formkörper erhalten bleiben. Die erfindungsgemäßen Formmassen lassen sich auch zur Herstellung weiterer Scheinwerferbauteile verwenden. Zu diesen Scheinwerferbauteilen zählen insbesondere Scheinwerfergehäuse, -rahmen, -halterungen und -führungen, wobei Scheinwerferrahmen bevorzugt sind.

Weiterhin bleiben die anderen vorteilhaften Eigenschaften der erfindungsgemäßen Formmassen wie niedrige Zykluszeiten, keine Formbelagsbildung bei der Spritzgußverarbeitung, hervorragende Qualität der metallisierten Oberflächen, erhalten.

Insbesondere ist keine Eintrübung der metallisierten Oberfläche beim Erwärmen des Formteils auf Temperaturen im Bereich von 100 bis 200°C, bevorzugt von 110 bis 180°C und besonders bevorzugt von 130 bis 170°C zu beobachten, so daß Formteile mit metallisierten Oberflächen mit dauerhaften Reflexionseigenschaften erhalten werden können.

Ferner hat sich der Einsatz der erfindungsgemäßen Formmassen bei der Herstellung von großflächigen Formteilen, die im Verhältnis zu ihrer Fläche vergleichsweise dünn sind, bei denen ein hervorragendes Entformungsverhalten gefordert ist, bewährt. Derartige großflächige Formteile sind insbesondere Schiebedachtraversen, Karosserieteile, Lufteinlaßgitter, Teile von Instrumententafeln, wie Instrumententafelträger, Abdeckungen, Luftkanäle, Anbauteile, insbesondere für die Mittelkonsole, Teil eines Handschuhfaches und Tachohutzen.

Die Erfindung wird durch die nachstehenden Beispiele näher erläutert:

**Beispiele:**

Beispiel und Vergleichsbeispiel

Entsprechend den Angaben in der nachstehenden Tabelle 1 werden die angegebenen Mengen Polybutylenterephthalat (PBT), Pfropfkautschuke P1 und P2, Copolymerisate PSAN und Additive in einem Schneckenextruder bei einer Temperatur von 250°C bis 270°C gemischt. Aus den dadurch gebildeten Formmassen werden die den betreffenden DIN-Normen entsprechenden Probekörper spritzgegossen.

PBT ist ein Polybutylenterephthalat mit einer Viskositätszahl von 130 (bestimmt in einer Polymerlösung (0,05g/ml) aus Phenol und 1,2-Dichlormethan (1:1)).

Glasfaser (Schnittglas aus Standardglas)

P1 ist ein kleinteiliger ASA-Pfropfkautschuk mit 25 Gew.-% Acrylnitril in der SAN-Pfropfhülle mit einer mittleren Teilchengröße von ca. 100 nm.

PSAN 33 ist ein Styrol/Acrylnitril-Copolymerisat mit 33 Gew.-% Acrylnitril.

PSAN 19 ist ein Styrol/Acrylnitril-Copolymerisat mit 19 Gew.-% Acrylnitril.

Entformungsmittel ist Loxiol VPG 861/3,5 der Firma Henkel.

Nukleierungsmittel ist Talkum IT Extra.

Umesterungsstabilisator ist Monozinkphosphatdihydrat.

Ruß ist Black Pearls 880.

Tabelle 2 enthält die Ergebnisse der durchgeführten Prüfungen.

Tabelle 1

| Genaue Rezepturen (Angaben in Gew.-%) | | |
|---|---|---|
| **Einsatzstoff** | **Referenz** | **Formmasse I** |
| | | |
| **PBT (VZ 130)** | 48 | 47,7 |
| **Glasfaser** | 20 | 20 |
| **PET** | 10 | 10 |
| **ASA** | 10 | 6 |
| **PSAN 33** | 11 | 5 |
| **PSAN 19** | | 10 |
| **Loxiol** | 0,5 | 0,5 |
| **Nukleierungsmittel** | | 0,1 |
| **Umesterungsstabilisator** | | 0,2 |
| **Ruß** | 0.5 | 0,5 |

Tabelle 2

| Prüfungen an spritzgegossenen Probekörpern nach DIN/ ISO: | | | |
|---|---|---|---|
| **Eigenschaft** | **Einheit** | **Referenz** | **Formmasse I** |
| **MVR 275/ 2,16** | $cm^3$/10min | 18 | 22 |
| **ISO 179/1eU** | $kJ/m^2$ | 49 | 48 |
| **ISO 179/1eA** | $kJ/m^2$ | 6,7 | 7,0 |
| **E-Modul** | Mpa | 6850 | 7400 |
| **Streckspannung** | Mpa | 103 | 118 |
| **Bruchdehnung** | % | 2,4 | 2,4 |
| **Durchstoßarbeit** | Nm | 2,5 | 3.5 |
| **HDT B** | °C | 208 | 212 |
| **Oberfläche** | | Gut | gut |
| **minimale Zykluszeit\*** | S | 20 | 12,5 |

\* Die Zykluszeit wurde an einer Entformungsleiste (Leiste mit 40 kurzen Rippen) bestimmt. Das Formteil hatte folgende Abmessungen:

| | |
|---|---|
| Volumen | 20 $cm^3$ |
| Abmessungen | 135 x 50 x 12 mm |
| Wanddicke | 2,0 mm |

Kegelanguß

| Spritz-/Werkzeugtemperatur | 270°C/ 80°C |
|---|---|

Es wird die Kühlzeit und damit die Zykluszeit soweit reduziert, bis das Formteil mit seinen Rippen im Werkzeug hängenbleibt. Das Hängenbleiben ist ein eindeutiges Beurteilungskriterium. Die minimale Zykluszeit ist die Zeit, die gerade noch eine Entformung der Formteile ermöglicht.

**Patentansprüche**

**1.** Formmasse, enthaltend, bezogen auf die Summe der Komponenten A bis G, die insgesamt 100 Gew.-% ergibt,

    a) 1 bis 99,59 Gew.-% der Formmasse mindestens eines Polyesters als Komponente A,

    b) 0,1 bis 20 Gew.-% mindestens eines teilchenförmigen Pfropfcopolymerisates aus

        b1) 50 bis 90 Gew.-% einer teilchenförmigen Pfropfgrundlage B1 mit einer Glasübergangstemperatur unterhalb 0°C und

        b2) 10 bis 50 Gew.-% einer Pfropfgrundlage B2 aus den Monomeren

            b21) 50 bis 90 Gew.-% einer vinylaromatischen Monomeren als Komponente B21 und

            b22) 10 bis 50 Gew.-% Acrylnitril und/oder Methacrylnitril als Komponente B22

    als Komponente B,

    c) 0,1 bis 20 Gew.-% mindestens eines Copolymerisates als Komponente C aus den Monomeren

        c1) 50 bis 90 Gew.-% mindestens eines vinylaromatischen Monomeren als Komponente C1 und

        c2) 10 bis 50 Gew.-% Acrylnitril und/oder Methacrylnitril als Komponente C2, jeweils bezogen auf die Komponente C,

        e) 0,1 bis 20 Gew.-% eines zu Komponente A unterschiedlichen Polyesters als Komponente E,

        f) 0,01 bis 10 Gew.-% mindestens eines Nukleierungsmittels und mindestens eines Umesterungsstabilisators, wobei das Massen-Verhältnis von Nukleierungsmittel zu Umesterungsstabilisator 1 : 100 bis 100 : 1 ist, als Komponente F,

        g) 0,1 bis 10 Gew.-% übliche Zusatzstoffe wie Ruß, UV-Stabilisatoren, Oxidationsverzögerer, Gleit- und Entformungsmittel als Komponente G.

**2.** Formmasse nach Anspruch 1, wobei in Komponente F das Nukleierungsmittel ein teilchenförmiger Feststoff mit einer Korngröße im Bereich von 0,1 bis 15 μm, oder der Umesterungsstabilisator mindestens eine phosphorhaltige Verbindung, oder das Nukleierungsmittel ein teilchenförmiger Feststoff mit einer Korngröße im Bereich von 0,1 bis 15 μm und der Umesterungsstabilisator mindestens eine phosphorhaltige Verbindung ist.

**3.** Formmasse nach Anspruch 1 oder 2, wobei diese zusätzlich von 0 bis 30 Gew.-% ihrer Masse ein Polycarbonat als Komponente H und 0,1 bis 100 Gew.-% ihrer Masse eine Faser als Komponente I enthält.

**4.** Formmasse nach einem der Ansprüche 1 bis 3, wobei die Komponente A besteht aus

    a1) 50 bis 100 Gew.-% Polybutylenterephthalat und

a2) 0 bis 50 Gew.-% eines weiteren Polykondensates.

5. Formmasse nach einem der Ansprüche 1 bis 4, wobei die Komponente B aus

    b1) 50 bis 90 Gew.-% einer teilchenförmigen Pfropfgrundlage B1 aus den Monomeren

        b11) 75 bis 99,9 Gew.-% eines $C_1$- bis $C_{10}$-Alkylesters der Acrylsäure als Komponente B11,

        b12) 0,1 bis 10 Gew.-% mindestens eines polyfunktionellen Monomeren mit mindestens zwei olefinischen, nicht konjugierten Doppelbindungen als Komponente B12 und

        b13) 0 bis 24,9 Gew.-% eines oder mehrerer weiterer copolymerisierbarer Monomeren als Komponente B13,

    und

    b2) 10 bis 50 Gew.-% einer Pfropfauflage B2 aus den Monomeren

        b21) 50 bis 90 Gew.-% eines vinylaromatischen Monomeren als Komponente B21 und

        b22) 10 bis 50 Gew.-% Acrylnitril und/oder Methacrylnitril als Komponente B22

    besteht.

6. Formmasse nach einem der Ansprüche 3 bis 5, wobei das Polycarbonat der Komponente H eine Fließfähigkeit als Melt-Volume-Ratio bei 300°C und 1,2 kp nach ISO 1133 im Bereich von 9 bis 100 $cm^3$/ 10 min aufweist.

7. Formmasse nach einem der Ansprüche 1 bis 6, wobei die Komponente B zu 10 bis 90 Gew.-% aus einem kleinteiligen Pfropfcopolymerisat mit einer mittleren Teilchengröße von 50 bis 200 nm und zu 10 bis 90 Gew.-% aus einem großteiligen Pfropfcopolymerisat mit einer mittleren Teilchengröße von 250 bis 1000 nm besteht.

8. Formteile beinhaltend Formmassen gemäß einem der Ansprüche 1 bis 7.

9. Formteile nach Anspruch 8 mit einem oder mehreren der Merkmale i) bis vii)

    i) Kohlenstoff-Emission nach PV 3341 < 50 $\mu$g C/g

    ii) Ergebnis der Geruchsprüfung nach DIN 50 011/PV 3900 besser als Note 5;

    iii) Vicat B-Erweichungstemperatur > 120 °C;

    iv) Dichte im Bereich von 1,1 bis 1,5 $g/m^3$;

    v) Fließfähigkeit als Melt-Volume-Ratio bei 275°C und 2,16 kp nach ISO 1133 von > 10 $cm^3$/10 min;

    vi) Schlagzähigkeitabnahme nach ISO 179/1eU nach einer 1000 h dauernder Wärmelagerung bei 120°C von < 30 % gegenüber vor der Wärmelagerung;

    vii) Bruchdehnung nach DIN 53457 nach 1000 h dauernder Wärmelagerung bei 130°C > 2%.

10. Laminat, beinhaltend ein Formteil gemäß Anspruch 8 oder 9 und einen Polykondensatschaum.

11. Verfahren zum Recyceln von Formmassen nach einem der Ansprüche 1 bis 7, oder von Formteilen nach Anspruch 8 oder 9, oder von Laminat nach Anspruch 10.

12. Recyclat, erhältlich aus Formteilen nach Anspruch 8 oder 9, oder aus Laminat nach Anspruch 10.

13. Verwendung von Formmassen nach einem der Ansprüche 1 bis 7, oder von Formteilen nach Anspruch 8 oder 9, oder von Laminaten nach Anspruch 10 oder von Recyclaten nach Anspruch 12 für den Innenraum von Kraftfahrzeugen oder für Karosserieaußenteile von Kraftfahrzeugen.

14. Formteile für den Innenraum von Kraftfahrzeugen oder Karosserieaußenteile von Kraftfahrzeugen, beinhaltend Formmassen nach einem der Ansprüche 1 bis 7 oder Recyclat nach Anspruch 12.

15. Verwendung der in Anspruch 1 oder 2 definierten Komponente F zur Verringerung der Haftfähigkeit von Formmassen an Formen bei der Herstellung von Formteilen.

**Claims**

1. A molding composition comprising, based on the total of components A to G, which is 100% by weight,

    a) as component A, from 1 to 99.59% by weight, based on the molding composition, of at least one polyester,

    b) as component B, from 0.1 to 20% by weight of at least one particulate graft copolymer made from

        b1) from 50 to 90% by weight of a particulate graft base B1 with a glass transition temperature below 0°C, and

        b2) from 10 to 50% by-weight of a graft B2 made from the following monomers

            b21) as component B21, from 50 to 90% by weight of a vinylaromatic monomer, and

            b22) as component B22, from 10 to 50% by weight of acrylonitrile and/or methacrylonitrile,

    c) as component C, from 0.1 to 20% by weight of at least one copolymer made from the following monomers

        c1) as component C1, from 50 to 90% by weight of at least one vinylaromatic monomer, and

        c2) as component C2, from 10 to 50% by weight of acrylonitrile and/or methacrylonitrile, in each case based on component C,

    d) as component D, from 0 to 20% by weight of a copolymer similar to component C, where the content in % by weight of acrylonitrile and/or methacrylonitrile in component C differs from that in component D,

    e) as component E, from 0.1 to 20% by weight of a polyester other than component A,

    f) as component F, from 0.01 to 10% by weight of at least one nucleating agent and of at least one transesterification stabilizer, where the ratio by weight of nucleating agent to transesterification stabilizer is from 1: 100 to 100:1, and

    g) as component G, from 0.1 to 10% by weight of customary additives, such as carbon black, UV stabilizers, oxidation retarders, lubricants and mold-release agents.

2. A molding composition as claimed in claim 1, where in component F the nucleating agent is a particulate solid with a particle size of from 0.1 to 15 μm, or the transesterification stabilizer is at least one phosphorus-containing compound, or the nucleating agent is a particulate solid with a particle size of from 0.1 to 15 μm and the transesterification stabilizer is at least one phosphorus-containing compound.

3. A molding composition as claimed in claim 1 or 2, where this additionally comprises, as component H, from 0 to 30% by weight, based on its own weight, of a polycarbonate and, as component I, from 0.1 to 100% by weight, based on its own weight, of a fiber.

4. A molding composition as claimed in any one of claims 1 to 3, where component A is composed of

    a1) from 50 to 100% by weight of polybutylene terephthalate, and of

a2) from 0 to 50% by weight of another polycondensate.

5. A molding composition as claimed in any one of claims 1 to 4, where component B is composed of

   b1) from 50 to 90% by weight of a particulate graft base B1 made from the following monomers

   b11) as component B11, from 75 to 99.9% by weight of a $C_1$-$C_{10}$-alkyl acrylate,

   b12) as component B12, from 0.1 to 10% by weight of at least one polyfunctional monomer having at least two nonconjugated olefinic double bonds, and

   b13) as component B13, from 0 to 24.9% by weight of one or more other copolymerizable monomers,

   and of

   b2) from 10 to 50% by weight of a graft B2 made from the following monomers

   b21) as component B21, from 50 to 90% by weight of a vinylaromatic monomer, and

   b22) as component B22, from 10 to 50% by weight of acrylonitrile and/or methacrylonitrile.

6. A molding composition as claimed in any one of claims 3 to 5, where the polycarbonate of component H has a flowability expressed as melt volume rate at 300°C with 1.2 kp to ISO 1133 of from 9 to 100 cm$^3$/10 min.

7. A molding composition as claimed in any one of claims 1 to 6, where component B is composed of from 10 to 90% by weight of a small-particle graft copolymer with a median particle size of from 50 to 200 nm and of from 10 to 90% by weight of a large-particle graft copolymer with a median particle size of from 250 to 1000 nm.

8. A molding comprising molding compositions as claimed in any one of claims 1 to 7.

9. A molding as claimed in claim 8, with one or more of the features i) to vii)

   i) PV 3341 carbon emission < 50 µg of carbon/g;

   ii) a grade better than 5 as the result of the DIN 50 011/PV 3900 odor test;

   iii) Vicat B softening point > 120°C;

   iv) density of from 1.1 to 1.5 g/m$^3$;

   v) flowability, as melt volume rate at 275°C and 2.16 kp to ISO 1133, of > 10 cm$^3$/10 min;

   vi) reduction in impact strength to ISO 179/1eU after 1000 h of heat-aging at 120°C of < 30% compared with the value prior to heat-aging;

   vii) elongation at break to DIN 53457 > 2% after 1000 h of heat-aging at 130°C.

10. A laminate comprising a molding as claimed in claim 8 or 9 and a polycondensate foam.

11. A process for recycling molding compositions as claimed in any of claims 1 to 7, or moldings as claimed in claim 8 or 9, or a laminate as claimed in claim 10.

12. A recycled material obtainable from moldings as claimed in claim 8 or 9, or from laminate as claimed in claim 10.

13. The use of molding compositions as claimed in any one of claims 1 to 7, or of moldings as claimed in claim 8 or 9, or of laminates as claimed in claim 10 or of recycled materials as claimed in claim 12 for the interior of motor vehicles, or for exterior body parts of motor vehicles.

14. A molding for the interior of motor vehicles or exterior body parts of motor vehicles, comprising molding compositions as claimed in any one of claims 1 to 7 or recycled material as claimed in claim 12.

15. The use of the component F defined in claim 1 or 2 to reduce the adhesion of molding compositions to molds during the production of moldings.

**Revendications**

1. Masse de moulage contenant, par rapport à la somme des composants A à G, qui donne au total 100% en poids,

   a) 1 à 99,59% en poids de la masse de moulage d'au moins un polyester, comme composant A,
   b) 0,1 à 20% en poids d'au moins un copolymère de greffage en forme de particules, à base

      b1) de 50 à 90% en poids d'une base de greffage en forme de particules B1 ayant une température de transition vitreuse inférieure à 0°C, et
      b2) de 10 à 50% en poids d'une base de greffage B2 à base des monomères

         b21) 50 à 90% en poids d'un monomère vinylaromatique, comme composant B21, et
         b22) 10 à 50% en poids d'acrylonitrile et/ou de méthacrylonitrile, comme composant B22,

      comme composant B,
   c) 0,1 à 20% en poids d'au moins un copolymère, comme composant C, à base des monomères

         c1) 50 à 90% en poids d'au moins un monomère vinylaromatique, comme composant C1, et
         c2) 10 à 50% en poids d'acrylonitrile et/ou de méthacrylonitrile, comme composant C2, chaque fois par rapport au composant C,

   e) 0,1 à 20% en poids d'un polyester différent du composant A, comme composant E,
   f) 0,01 à 10% en poids d'au moins un agent de nucléation et d'au moins un stabilisant de transestérification, le rapport pondéral entre l'agent de nucléation et le stabilisant de transestérification étant de 1/100 à 100/1, comme composant F,
   g) 0,1 à 10% en poids d'additifs courants, tels que du noir de fumée, des stabilisants aux U.V., des retardateurs d'oxydation, des agents lubrifiants et de démoulage, comme composant G.

2. Masse de moulage suivant la revendication 1, dans laquelle, dans le composant F, l'agent de nucléation est une matière solide particulaire ayant une taille de grain de l'ordre de 0,1 à 15 μm ou dans laquelle le stabilisant de transestérification est au moins un composé contenant du phosphore, ou dans laquelle l'agent de nucléation est une matière solide particulaire ayant une taille de grain de l'ordre de 0,1 à 15 μm et le stabilisant de transestérification est au moins un composé contenant du phosphore.

3. Masse de moulage suivant l'une des revendications 1 et 2, dans laquelle celle-ci contient, en supplément, de 0 à 30% en poids de sa masse d'un polycarbonate, comme composant H, et 0,1 à 100% en poids de sa masse d'une fibre, comme composant I.

4. Masse de moulage suivant l'une des revendications 1 à 3, dans laquelle le composant A est constitué

   a1) de 50 à 100% en poids de téréphtalate de polybutylène, et
   a2) de 0 à 50% en poids d'un autre polycondensat.

5. Masse de moulage suivant l'une des revendications 1 à 4, dans laquelle le composant B est constitué

   b1) de 50 à 90% en poids d'une base de greffage en forme de particules B1 à base des monomères

      b11) 75 à 99,9% en poids d'un ester alkylique en $C_1$-$C_{10}$ de l'acide acrylique, comme composant B11,
      b12) 0,1 à 10% en poids d'au moins un monomère polyfonctionnel comportant au moins deux doubles liaisons oléfiniques, non conjuguées, comme composant B12, et
      b13) 0 à 24,9% en poids d'un ou de plusieurs autres monomères copolymérisables, comme composant B13,

et

b2) de 10 à 50% en poids d'une base de greffage B2 à base des monomères

b21) 50 à 90% en poids d'un monomère vinylaromatique, comme composant B21, et
b22) 10 à 50% en poids d'acrylonitrile et/ou de méthacrylonitrile, comme composant B22.

6.  Masse de moulage suivant l'une des revendications 3 à 5, dans laquelle le polycarbonate du composant H présente une fluidité, comme rapport fusion-volume à 300°C et 1,2 kp selon ISO 1133, de l'ordre de 9 à 100 cm$^3$/10 minutes.

7.  Masse de moulage suivant l'une des revendications 1 à 6, dans laquelle le composant B est constitué pour 10 à 90% en poids d'un copolymère de greffage à petites particules ayant une taille de particule moyenne de 50 à 200 nm et pour 10 à 90% en poids d'un copolymère de greffage à grosses particules ayant une taille de particule moyenne de 250 à 1000 nm.

8.  Pièces moulées contenant des masses de moulage suivant l'une des revendications 1 à 7.

9.  Pièces moulées suivant la revendication 8, présentant une ou plusieurs des particularités i) à vii)

i) émission de carbone selon PV 3341 < 50 µg C/g,
ii) résultat de l'examen d'odeur selon DIN 50 011/PV 3900 meilleur qu'une note 5,
iii) température de ramollissement de Vicat B >120°C,
iv) densité de l'ordre de 1,1 à 1,5 g/m$^3$,
v) fluidité comme rapport fusion-volume à 275°C et 2,16 kp selon ISO 1133 de >10 cm$^3$/10 minutes,
vi) diminution de résistance aux chocs selon ISO 179/1eU après un entreposage à chaud d'une durée de 1000 heures à 120°C de <30% par rapport à avant l'entreposage à chaud,
vii) allongement à la rupture selon DIN 53457 après un entreposage à chaud d'une durée de 1000 heures à 130°C de >2%.

10. Stratifié, comportant une pièce moulée suivant l'une des revendications 8 et 9, et une mousse de polycondensat.

11. Procédé de recyclage de masses de moulage suivant l'une des revendications 1 à 7, ou de pièces moulées suivant l'une des revendications 8 et 9, ou d'un stratifié selon la revendication 10.

12. Produit de recyclage, que l'on peut obtenir à partir de pièces moulées suivant l'une des revendications 8 et 9, ou de stratifié suivant la revendication 10.

13. Utilisation de masses de moulage suivant l'une des revendications 1 à 7, ou de pièces moulées suivant l'une des revendications 8 et 9, ou de stratifiés suivant la revendication 10, ou de produits de recyclage suivant la revendication 12, pour le volume intérieur de véhicules automobiles ou pour des parties externes de carrosserie de véhicules automobiles.

14. Pièces moulées pour le volume intérieur de véhicules automobiles ou des pièces extérieures de carrosserie de véhicules automobiles, comportant des masses de moulage suivant l'une des revendications 1 à 7, ou un produit de recyclage suivant la revendication 12.

15. Utilisation du composant F défini dans l'une des revendications 1 et 2, pour diminuer l'adhésivité de masses de moulage sur des moules, lors de la fabrication de pièces moulées.